# EUROPEAN PATENT APPLICATION

(11) **EP 4 808 168 A1**
(43) Date of publication of application: **16.09.2026**
(21) Application number: 24896239.1
(22) Date of filing: 08.11.2024
(51) Int. Cl.: H04W 4/20

(54) **SYSTEM INFORMATION SENDING METHOD, APPARATUS AND SYSTEM**

(30) Priority: 30.11.2023 CN 202311632151
(71) Applicant: Huawei Technologies Co., Ltd., Shenzhen, Guangdong 518129 (CN)
(72) Inventor: CHENG, Yunuo, Shenzhen, Guangdong 518129 (CN); ZHOU, Runze, Shenzhen, Guangdong 518129 (CN); WANG, Xinwei, Shenzhen, Guangdong 518129 (CN)
(74) Representative: Goddar, Heinz J.
(86) International application number: PCT/CN2024/131082
(87) International publication number: WO 2025/113148

(57) **Abstract**

This specification relates to the field of communication technologies and discloses a system information sending method, an apparatus, and a system, to resolve long-term bit errors and sudden access service rate drops at a terminal caused by a base station sending a SIB2 with changed information at an early position within a 1^{st} SI window and the terminal failing to parse the SIB2 with changed information within the 1^{st} SI window in a timely manner. The method includes: An access network device obtains a SIB2 when information in the SIB2 changes, and then sends, to a terminal, the SIB2 located in a 4^{th} system frame within a 1^{st} SI window. Correspondingly, the terminal receives the SIB2 with changed information sent by the access network device and located in the 4^{th} system frame within the 1^{st} SI window, and parses the SIB2 based on the changed information therein. The solution in this application may be widely applicable to fields such as communication technologies, artificial intelligence, internet of vehicles, and smart home networking.

## Description

This application claims priority to Chinese Patent Application No. 202311632151.4, filed with the China National Intellectual Property Administration on November 30, 2023 and entitled "SYSTEM INFORMATION SENDING METHOD, APPARATUS, AND SYSTEM", which is incorporated herein by reference in its entirety.

### TECHNICAL FIELD

This application relates to the communication field, and in particular, to a system information sending method, an apparatus, and a system.

### BACKGROUND

**In** wireless communication, system information is a message sent by a base station to a terminal, and the system information may include information required for terminal initialization and related information of some other functions/features. The system information may be divided into a master information block (master information block, MIB), a system information block 1 (system information block 1, SIB1), and other system information. The other system information includes SIBs other than the SIB1. Different SIBs provide different information for the terminal. For example, the other system information may include a system information block 2 (system information block 2, SIB2). The SIB2 is mainly used to provide related information of common radio resource configuration for the terminal, such as uplink frequency information or multicast broadcast single frequency network (multicast broadcast single frequency network, MBSFN) configuration information.

The base station may send the SIB2 within a 1^{st} system information (system information, SI) window. Specifically, an efficient scheme for sending the SIB2 within the 1^{st} SI window is required.

### SUMMARY

Embodiments of this application provide a system information sending method, an apparatus, and a system, and provide a feasible solution for sending a SIB2, so that a terminal can parse the SIB2 within a 1^{st} SI window in a timely manner, thereby avoiding long-term bit errors and sudden access service rate drops at the terminal.

To achieve the foregoing objective, this application uses the following technical solutions.

According to a first aspect, this application provides a system information sending method. The method may be performed by an access network device and a functional module or a chip in the access network device. The method being performed by the access network device is used as an example. The method includes: The access network device obtains a SIB2 with changed information (where the SIB2 may be referred to as a changed SIB2) when radio resource configuration information in the SIB2 changes, and then the access network device sends the changed SIB2 located in a 4^{th} system frame within a 1^{st} SI window. In other words, the changed SIB2 is located in the 4^{th} system frame within the 1^{st} SI window, or the SIB2 is carried in the 4^{th} system frame within the 1^{st} SI window for sending.

According to the method in the first aspect, the access network device sends the SIB2 with changed information in the 4^{th} system frame within the 1^{st} SI window, that is, sends the SIB2 at a later position within the 1^{st} SI window, so that a terminal has enough time to receive the SIB2 with changed information, to further ensure that the terminal can parse the SIB2 with changed information in a timely manner after parsing a MIB and a SIB1. This resolves long-term bit errors and sudden access service rate drops caused by the terminal failing to parse the SIB2 with changed information within the 1^{st} SI window in a timely manner.

In this application, the SIB2 includes information that is specified in a standard and that is used to provide common radio resource configuration for the terminal (where the information may be referred to as radio resource configuration information). When the information included in the SIB2 changes, for example, when a specific value of a radio resource configuration parameter A included in the SIB2 changes from 1 to 2, the changed radio resource configuration parameter A and the specific value obtained after the change are carried in the SIB2 and sent to the terminal. In this case, the SIB2 carrying the changed information may be referred to as a SIB2 with changed information or a changed SIB2. This is not limited.

Optionally, based on different specific values of configuration information carried in the SIB2, the SIB2 is sent in different subframes in the 4^{th} system frame within the 1^{st} SI window. Specifically, that the SIB2 is sent in the 4^{th} system frame within the 1^{st} SI window includes the following several possible designs.

In a possible design, the radio resource configuration information in the SIB2 includes MBSFN configuration information, and in the scenario, the SIB2 is located in at least one of a subframe numbered 0, a subframe numbered 4, a subframe numbered 5, and a subframe numbered 9 in the 4^{th} system frame within the 1^{st} SI window.

Optionally, in this application, the MBSFN configuration information may indicate a terminal to access a multimedia broadcast multicast service. In this case, an MBSFN subframe is configured for the access network device, and the MBSFN subframe is a special subframe specified in a wireless communication protocol, and refers to a subframe used to send a broadcast message to a plurality of terminals. When the MBSFN subframe is configured for a base station, a subframe for the base station to send other SIs shall avoid the MBSFN subframe. The MBSFN subframe includes at least one of the following: a subframe numbered 1, a subframe numbered 2, a subframe numbered 3, a subframe numbered 6, a subframe numbered 7, and a subframe numbered 8.

Based on the possible design, when the MBSFN subframe is configured for the access network device, and the radio resource configuration information in the SIB2 includes the MBSFN configuration information, a number of a possible subframe in which the SIB2 with changed information is located and that is in the 4^{th} system frame within the 1^{st} SI window is provided, so that this solution is applicable to the standard wireless communication protocol. In addition, the SIB2 with changed information is located in at least one subframe in the 4^{th} system frame within the 1^{st} SI window, to increase a probability that the terminal successfully parses the SIB2 with changed information.

In a possible design, the radio resource configuration information in the SIB2 includes non-MBSFN configuration information, and the SIB2 is located in at least one of a subframe numbered 0, a subframe numbered 1, a subframe numbered 2, and a subframe numbered 3 in the 4^{th} system frame within the 1^{st} SI window.

Optionally, in this application, the non-MBSFN configuration information may indicate the terminal to access another service other than a multimedia broadcast multicast service. In this case, an MBSFN subframe is not configured for the access network device.

Based on the possible design, when the MBSFN subframe is not configured for the access network device, and the radio resource configuration information in the SIB2 includes the non-MBSFN configuration information, a possibility that the SIB2 with changed information is located in consecutive subframes in the 4^{th} system frame within the 1^{st} SI window is provided, thereby achieving an objective of the SIB2 with changed information being located in the 4^{th} system frame within the 1^{st} SI window. In addition, the SIB2 with changed information is located in at least one of the consecutive subframes in the 4^{th} system frame within the 1^{st} SI window, to increase a probability that the terminal successfully parses the SIB2 with changed information.

In a possible design, the radio resource configuration information in the SIB2 includes non-MBSFN configuration information, and the SIB2 is located in at least one of a subframe numbered 0, a subframe numbered 2, a subframe numbered 5, and a subframe numbered 9 in the 4^{th} system frame within the 1^{st} SI window.

Based on the possible design, when the radio resource configuration information in the SIB2 includes the non-MBSFN configuration information, a possibility that the SIB2 with changed information is located in non-consecutive subframes in the 4^{th} system frame within the 1^{st} SI window is provided, thereby achieving an objective of the SIB2 with changed information being located in the 4^{th} system frame within the 1^{st} SI window. In addition, the SIB2 with changed information is located in at least one of the non-consecutive subframes in the 4^{th} system frame, to increase a probability that the terminal successfully parses the changed SIB2.

In a possible design, the information in the SIB2 includes non-MBSFN configuration information, and the SIB2 is located in any one or more subframes in the 4^{th} system frame within the 1^{st} SI window.

Based on the possible design, when the radio resource configuration information in the SIB2 includes the non-MBSFN configuration information, a position of a possible subframe in which the SIB2 with changed information is located and that is in the 4^{th} system frame within the 1^{st} SI window is provided. This not only achieves an objective of the SIB2 with changed information being located in the 4^{th} system frame within the 1^{st} SI window, but also improves utilization of this solution.

According to a second aspect, this application provides a system information sending method. The method may be performed by a terminal and a functional module or a chip in the terminal. The method being performed by the terminal is used as an example. The method includes: The terminal receives a SIB2 with changed information in a 4^{th} system frame within a 1^{st} SI window, and parses the SIB2.

Optionally, based on different specific values of configuration information carried in the SIB2, the SIB2 may be located in different subframes in the 4^{th} system frame within the 1^{st} SI window. Specifically, for designs of different subframes for the SIB2 in the 4^{th} system frame, refer to the first aspect or the possible designs of the first aspect. Details are not described again.

According to the method in the second aspect, the terminal may receive the SIB2 with changed information in the 4^{th} system frame within the 1^{st} SI window in a timely manner, and parse the changed SIB2 in a timely manner based on the received SIB2 with changed information, to resolve long-term bit errors and sudden access service rate drops caused by the terminal failing to parse the SIB2 with changed information in a timely manner.

According to a third aspect, this application provides a communication apparatus. The communication apparatus may be an access network device or a chip or a system on a chip in the access network device, or may be a functional module, in the access network device, configured to implement the method in any one of the first aspect or the possible designs of the first aspect. The communication apparatus may implement a function performed by the access network device in the first aspect or the possible designs of the first aspect, and the function may be implemented by hardware executing corresponding software. The hardware or the software includes one or more modules corresponding to the foregoing function. For example, the communication apparatus may include a processing unit and a transceiver unit.

The processing unit is configured to obtain a system information block SIB2 when information in the SIB2 changes.

The transceiver unit is configured to send the SIB2, where the SIB2 is located in a 4^{th} system frame within a 1^{st} system information SI window.

Specifically, for related descriptions of the SIB2, refer to the descriptions in any one of the first aspect or the possible designs of the first aspect. In addition, for an action performed by each unit in the communication apparatus, refer to the descriptions in any one of the first aspect or the possible designs of the first aspect. Details are not described again.

According to a fourth aspect, this application provides a communication apparatus. The communication apparatus may be an access network device or a chip or a system on a chip in the access network device. The communication apparatus may implement a function performed by the access network device in the first aspect or the possible designs of the first aspect, and the function may be implemented by hardware. In a possible design, the communication apparatus includes a processor and a communication interface. The processor and the communication interface are configured to support the communication apparatus in performing the system information sending method in any one of the first aspect or the possible designs of the first aspect. In another possible design, the communication apparatus may further include a memory. The memory is configured to store computer-executable instructions and data necessary for the communication apparatus. When the communication apparatus runs, the processor executes the computer-executable instructions stored in the memory, so that the communication apparatus is caused to perform the system information sending method according to any one of the first aspect or the possible designs of the first aspect.

According to a fifth aspect, this application provides a communication apparatus. The communication apparatus may be a terminal or a chip or a system on a chip in the terminal, or may be a functional module, in the terminal, configured to implement the method in any one of the second aspect or the possible designs of the second aspect. The communication apparatus may implement a function performed by the terminal in the foregoing aspects or the possible designs, and the function may be implemented by hardware executing corresponding software. The hardware or the software includes one or more modules corresponding to the foregoing function. For example, the communication apparatus may include a transceiver unit and a processing unit.

The transceiver unit is configured to receive a SIB2 with changed information, where the SIB2 is located in a 4^{th} system frame within a 1^{st} system information SI window.

The processing unit is configured to parse the SIB2.

Specifically, for related descriptions of the SIB2 with changed information, refer to the descriptions in any one of the second aspect or the possible designs of the second aspect. In addition, for an action performed by each unit in the communication apparatus, refer to the descriptions in any one of the second aspect or the possible designs of the second aspect. Details are not described again.

According to a sixth aspect, this application provides a communication apparatus. The communication apparatus may be a terminal or a chip or a system on a chip in the terminal. The communication apparatus may implement a function performed by the terminal in the foregoing aspects or the possible designs, and the function may be implemented by hardware. In a possible design, the communication apparatus includes a processor and a communication interface. The processor and the communication interface are configured to support the communication apparatus in performing the system information sending method in any one of the second aspect or the possible designs of the second aspect. In another possible design, the communication apparatus may further include a memory. The memory is configured to store computer-executable instructions and data necessary for the communication apparatus. When the communication apparatus runs, the processor executes the computer-executable instructions stored in the memory, so that the communication apparatus is caused to perform the system information sending method in any one of the second aspect or the possible designs of the second aspect.

According to a seventh aspect, this application provides a communication system. The communication system includes the communication apparatus provided in the third aspect or the fourth aspect, or the communication system includes the communication apparatus provided in the fifth aspect or the sixth aspect.

According to an eighth aspect, this application provides a computer-readable storage medium. The computer-readable storage medium stores computer instructions. When the computer instructions are executed on a computer, the computer is caused to perform the system information sending method in any one of the first aspect or the possible designs of the first aspect, or the computer is caused to perform the system information sending method in any one of the second aspect or the possible designs of the second aspect.

According to a ninth aspect, this application provides a computer program product. The computer program product includes computer instructions. When the computer instructions are executed on a computer, the computer is caused to perform the system information sending method in any one of the first aspect or the possible designs of the first aspect, or the computer is caused to perform the system information sending method in any one of the second aspect or the possible designs of the second aspect.

For technical effects brought by any one of the designs in the third aspect and the fourth aspect, refer to the technical effects brought by any one of the first aspect or the possible designs of the first aspect. Details are not described again. For technical effects brought by any one of the designs in the fifth aspect and the sixth aspect, refer to the technical effects brought by any one of the second aspect or the possible designs of the second aspect. Details are not described again. For technical effects brought by any one of the designs in the seventh aspect to the ninth aspect, refer to the technical effects brought by any one of the first aspect or the possible designs of the first aspect. Alternatively, for technical effects brought by any one of the designs in the seventh aspect to the ninth aspect, refer to the technical effects brought by any one of the second aspect or the possible designs of the second aspect. Details are not described again.

### BRIEF DESCRIPTION OF DRAWINGS

FIG. 1 is a diagram of a position of system information;
FIG. 2a and FIG. 2b are a diagram of a period of a SIB2;
FIG. 3 is a diagram of a communication system according to an embodiment of this application;
FIG. 4 is a schematic flowchart of a system information sending method according to an embodiment of this application;
FIG. 5 is a diagram of a position of a SIB2 according to an embodiment of this application;
FIG. 6 is a diagram of a position of a SIB2 according to an embodiment of this application;
FIG. 7 is a diagram of a position of a SIB2 according to an embodiment of this application;
FIG. 8 is a diagram of a position of a SIB2 according to an embodiment of this application;
FIG. 9 is a schematic flowchart of a system information sending method according to an embodiment of this application;
FIG. 10 is a schematic flowchart of a system information sending method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

Before embodiments of this application are described, some technical terms in embodiments of this application are explained and described. It needs to be noted that the following explanations and descriptions are intended to facilitate understanding of embodiments of this application, and should not be construed as a limitation on the protection scope claimed in embodiments of this application.

System **information** is a message sent by a base station to a terminal, and the system information may include information required for terminal initialization and related information of some other functions/features. When the terminal accesses a cell or a broadcast message sent by the base station changes, the base station sends the system information, to help the terminal update or correct a current state of the terminal, and complete a corresponding communication service and a physical process. The system information may be divided into minimum system information (minimum SI) and other system information (other SI). The minimum system information includes a master information block (master information block, MIB) and a system information block 1 (system information block 1, SIB1). The SIB1 is also referred to as remaining minimum system information (remaining minimum SI, RMSI). The other system information includes other system information blocks (system information block, SIB), for example, a SIB2 to a SIB13.

Optionally, a time domain resource used by the base station to send the system information is in a unit of a radio frame. In other words, the system information may be carried in the radio frame for sending. For example, the MIB, the SIB1, or another SIB like the SIB2 may be carried in the radio frame for sending. The radio frame carrying the system information may form an SI window, and positions of different system information in the radio frame may be the same, or may be different. This is not limited.

In this application, the radio frame may also be referred to as a frame for short or a system frame. This is not limited. Each radio frame includes 10 subframes. Duration corresponding to each subframe is 1 millisecond (ms), and duration corresponding to each radio frame is 10 ms. The radio frame may also be referred to as a system frame. It should be understood that in this application, the radio frame may be numbered to identify the radio frame. For example, radio frames may be numbered consecutively using natural numbers. A 1^{st} radio frame may be a radio frame 0, a 2^{nd} radio frame may be a radio frame 1, ..., and an n^{th} radio frame may be a radio frame n-1. In this case, the n^{th} radio frame may also be referred to as a system frame numbered n-1, and the system frame numbered n-1 may be referred to as a frame numbered n-1 for short. This is not limited. Similarly, the subframes included in each radio frame may also be numbered consecutively using natural numbers. An example in which the radio frame includes 10 subframes is used. A 1^{st} subframe may be a subframe 0 or a subframe numbered 0, a 2^{nd} subframe may be a subframe 1 or a subframe numbered 1, ..., and a 10^{th} subframe may be a subframe 9 or a subframe numbered 9.

In this application, the MIB carries most basic information. The information relates to decoding of a physical downlink shared channel (physical downlink shared channel, PDSCH) channel. The terminal can use a parameter in the MIB to continue decoding data in the PDSCH, including decoding a SIB, only after the terminal has decoded the MIB. Therefore, the base station first sends the MIB, and then sends a series of SIBs. The MIB is periodically broadcast on a broadcast channel (broadcast channel, BCH). A wireless communication protocol specifies that a period of the MIB is 40 ms, and all MIBs are sent in the subframe numbered 0. If a number of a system frame (system frame number, SFN) satisfies a condition of (SFN mod 4 = 0), a subframe numbered 0 in the system frame is for transmitting the MIB for the first time (first transmission). MIBs at moments of other three subframes numbered 0 within the same MIB period are repeatedly sent. In other words, a physical layer of the base station sends the MIB every 10 ms. Provided that the terminal receives a MIB in any one of the subframes numbered 0, the terminal can perform independent decoding without waiting to receive all the four MIB blocks before decoding.

It needs to be noted that the information carried in the MIB is only a very limited part of the system information, and most of the system information still needs to be sent by using the SIB block. After sending the MIB, the base station continues to send several different types of SIBs. These SIBs provide the terminal with several parameters required for cell camping, retransmission, link establishment, and the like. The SIB1 is a most important SIB among all the SIBs because in addition to carrying parameters required by the terminal for cell access, the SIB 1 further carries scheduling information of other SIBs. If the terminal cannot decode the SIB1, the terminal cannot decode the other SIBs either. Based on this, a basic procedure in which the terminal obtains the system information is as follows: The terminal first obtains the MIB, obtains the SIB 1 based on scheduling information in the MIB, and then obtains the other SIBs based on scheduling information in the SIB1.

In this application, the SIB1 mainly carries information related to cell access and cell selection, a time division long term evolution (time division long term evolution, TDD-LTE) subframe configuration, scheduling information and window information of other SIBs, and the like. The base station periodically broadcasts the SIB1 by using a SystemInformationBlockType1 message. The wireless communication protocol specifies that a period of the SIB1 is 80 ms, and all SIB1s are sent in the subframe numbered 5. Similar to a sending mechanism of the MIB, the SIB1 is also repeatedly sent four times within 80 ms. If a number of a system frame SFN satisfies a condition of (SFN mod 8 = 0), it is considered that a subframe numbered 5 in the system frame is for sending the SIB1 for the first time within the period, and then the SIB1 is repeatedly sent in subframes numbered 5 in other system frames whose system frame numbers satisfy a condition of (SFN mod 2 = 0) within the same SIB1 period.

In this application, the SIB2 mainly carries information such as information related to common radio resource configuration (for example, information such as resource allocation and scheduling of a physical uplink control channel (physical uplink control channel, PUCCH), a physical uplink shared channel (physical uplink shared channel, PUSCH), and a sounding reference signal (sounding reference signal, SRS)), a timer and a constant (where for example, a value of parameter of an RRC connection establishment timer is set to 200 ms), frequency information (for example, uplink frequency information), and MBSFN configuration. The information carried in the SIB2 plays an important role in parsing uplink and downlink resource usage of a current system and analyzing network resource issues by the terminal. Therefore, the wireless communication protocol specifies that the SIB2 is sent within a 1^{st} SI window. Optionally, subframes for sending the SIB2 cannot include an MBSFN subframe. The MBSFN subframe is a special subframe specified in the wireless communication protocol, and refers to a subframe used to send a broadcast message to a plurality of terminals. When the MBSFN subframe is configured for a base station, a subframe for the base station to send other SIs shall avoid the MBSFN subframe. The MBSFN subframe includes at least one of the following: a subframe numbered 1, a subframe numbered 2, a subframe numbered 3, a subframe numbered 6, a subframe numbered 7, and a subframe numbered 8.

For an SI window, a sending occasion of each piece of SI is limited in an independent window, and the window is also referred to as an SI window. Each piece of SI corresponds to one SI window, and different SI windows do not overlap. In an SI window, only SI corresponding to the SI window is to be transmitted, and other SIs are not sent. Lengths of all SI windows are the same, and a length value of the SI window may be configured in the SIB1. For example, in the SIB1, a length of each SI window is configured to 40 ms; or in the SIB1, a length of each SI window is configured to 80 ms, or the length of the SI window is configured to 160 ms. Within an SI window, a SIB corresponding to the SI window may be sent a plurality of times, and may be sent in any subframe. For example, in an SI window, SI may be continuously sent in a plurality of subframes, or may not be sent in a specific subframe.

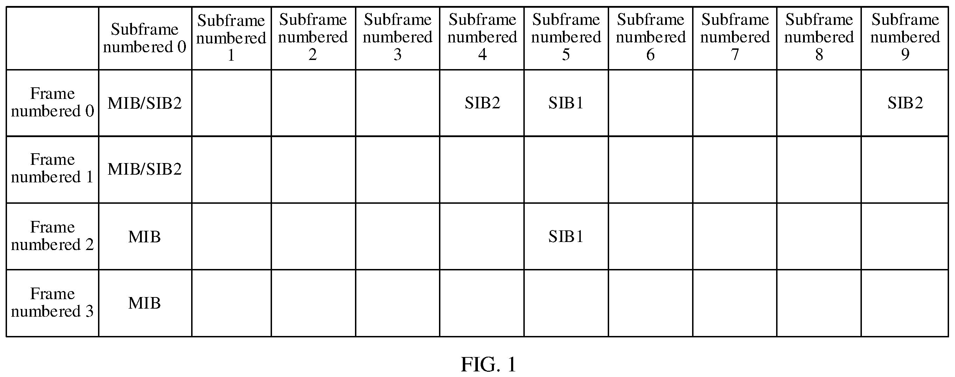

For example, the length of the SI window is 40 ms. FIG. 1 shows four radio frames. As shown in FIG. 1, the four radio frames may be sequentially a frame numbered 0, a frame numbered 1, a frame numbered 2, and a frame numbered 3, and each subframe in the four radio frames includes a subframe numbered 0 to a subframe numbered 9, that is, 10 subframes in total. The four radio frames form an SI window, and a length of the SI window is 40 ms. As shown in FIG. 1, a MIB is sent in subframes numbered 0 in all the system frames within the 1^{st} SI window. The MIB in the subframe numbered 0 in the frame numbered 0 is a MIB transmitted for the first time, and the MIB sent in the subframes numbered 0 in the other system frames within the 1^{st} SI window has the same message as the MIB transmitted for the first time. A SIB1 is sent in the subframe numbered 5 in the frame numbered 0 and the subframe numbered 5 in the frame numbered 2 in the SI window. The SIB1 in the subframe numbered 5 in the frame numbered 0 is a SIB 1 transmitted for the first time, and the SIB1 sent in the subframe numbered 5 in the frame numbered 2 has the same message as the SIB1 transmitted for the first time. As shown in FIG. 1, a SIB2 is sent in the subframe numbered 0 in the frame numbered 0, the subframe numbered 4 in the frame numbered 0, the subframe numbered 9 in the frame numbered 0, and the subframe numbered 0 in the frame numbered 1 within the 1^{st} SI window. The subframe numbers for sending the SIB2 within the 1^{st} SI window do not include the subframe numbered 5 in the frame numbered 0 and the subframe numbered 5 in the frame numbered 2 that is occupied by the SIB1. In FIG. 1, a period of the SIB2 is 160 ms. The terminal receive and parse the SIB2 only after the terminal successfully parses the MIB and the SIB1. When the terminal successfully parses the SIB1 only in the subframe numbered 5 in the frame numbered 2, but because no SIB2 exists after the SIB1, the terminal cannot receive or parse the SIB2.

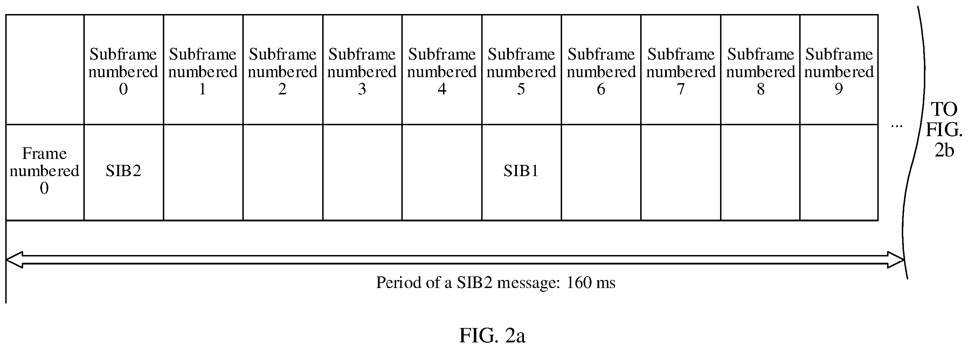

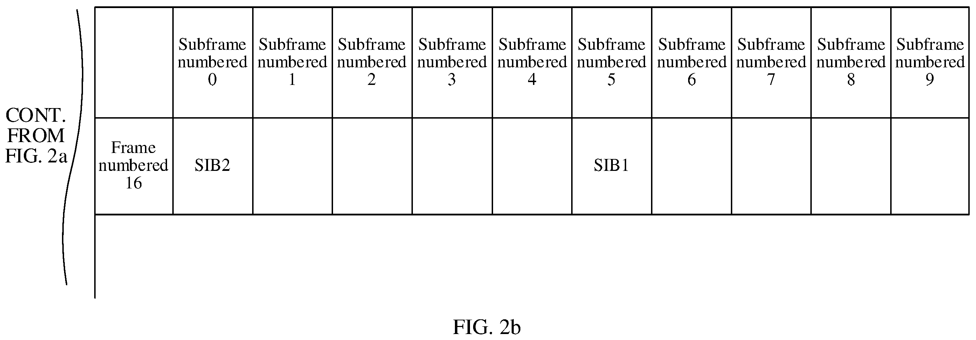

For another example, the length of the SI window is 40 ms. FIG. 2a and FIG. 2b show 17 radio frames. As shown in FIG. 2a and FIG. 2b, a period of a SIB2 is 160 ms. When the terminal fails to parse the SIB2 in a subframe numbered 0 in a frame numbered 0, the terminal can re-parse the SIB2 only in a subframe numbered 0 in a frame numbered 16 after 160 ms.

Therefore, when the base station changes the SIB2, the terminal needs to parse the changed SIB2 after channel transformation duration after successfully parsing the MIB and the SIB1. In this case, if the base station sends the changed SIB2 at an early position within the 1^{st} SI window (for example, the frame numbered 0 within the 1^{st} SI window), the terminal fails to parse the changed SIB2 within the 1^{st} SI window because a channel has not been successfully transformed, and needs to wait for at least one period of the SIB2 before parsing the changed SIB2 within the 1^{st} SI window, resulting in long-term bit errors and sudden access service rate drops at the terminal.

To resolve the foregoing problems, this application provides a system information sending method. The method includes: An access network device (for example, a base station) obtains a SIB2 when radio resource configuration information in the SIB2 changes, and then sends, to a terminal, the SIB2 located in a 4^{th} system frame within a 1^{st} SI window. Correspondingly, the terminal receives the SIB2 with changed radio resource configuration information that is sent by the access network device and that is located in the 4^{th} system frame within the 1^{st} SI window, and parses the SIB2 based on the SIB2 with changed information. In this way, the access network device sends the SIB2 with changed information in the 4^{th} system frame within the 1^{st} SI window, so that the terminal has enough time to transform a channel, to further ensure that the terminal can parse the SIB2 with changed information in a timely manner. This resolves long-term bit errors and sudden access service rate drops caused by the terminal failing to parse the SIB2 with changed information within the 1^{st} SI window in a timely manner.

The system information sending method provided in embodiments of this application is described below with reference to the accompanying drawings of the specification.

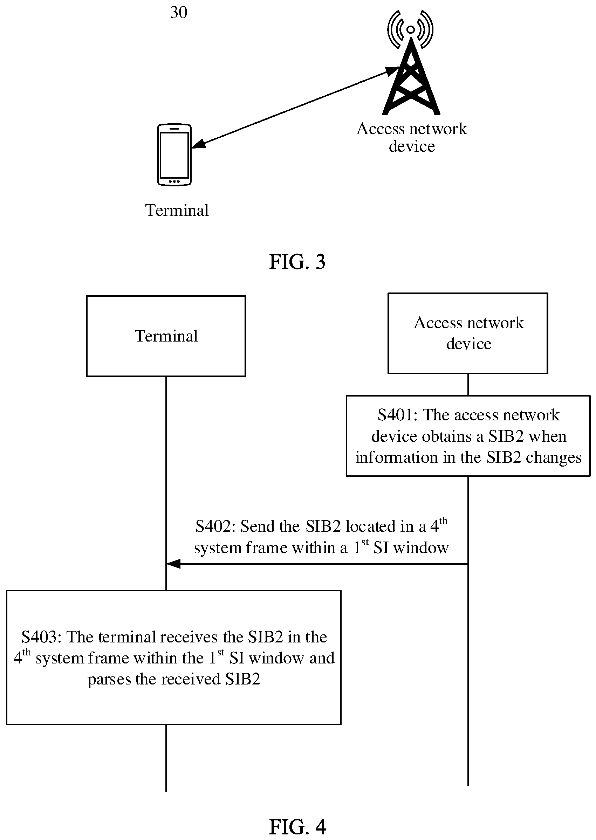

The technical solutions in embodiments of this application may be applied to various communication systems. The communication system may be a third-generation partnership project (third generation partnership project, 3GPP) communication system, for example, a long term evolution (long term evolution, LTE) system, or may be a fifth-generation (fifth generation, 5G) mobile communication system, a new radio (new radio, NR) system, a beyond 5G (beyond 5G, B5G) mobile communication system, a 6^{th}-generation (6^{th}-generation, 6G) mobile communication system, and a vehicle to everything (vehicle to everything, NR V2X) system, and may be further used in a system of LTE and 5G hybrid networking, a device-to-device (device-to-device, D2D) communication system, a machine to machine (machine to machine, M2M) communication system, an internet of things (Internet of Things, IoT), and another next-generation communication system, or may be a non-3GPP communication system. This is not limited. The following uses a communication system shown in FIG. 3 as an example to describe the system information sending method provided in embodiments of this application.

The technical solutions in embodiments of this application may be applied to various communication scenarios, for example, may be applied to one or more of the following communication scenarios: communication scenarios such as enhanced mobile broadband (enhanced mobile broadband, eMBB), ultra reliable low latency communication (ultra reliable low latency communication, URLLC), machine type communication (machine type communication, MTC), massive machine type communications (massive machine type communications, mMTC), D2D, V2X, and IoT.

FIG. 3 is a diagram of a communication system according to an embodiment of this application. As shown in FIG. 3, a communication system 30 includes a terminal and an access network device. It may be understood that devices in the communication system 30 may communicate directly with each other, or may perform communication through forwarding by another device. This is not specifically limited in embodiments of this application.

It may be understood that FIG. 3 is merely a diagram, and does not constitute a limitation on an applicable scenario of the technical solutions provided in this application. A person skilled in the art should understand that during specific implementation, the communication system 30 may also include fewer devices than those shown in FIG. 3, or the communication system 30 may further include another device. In addition, a quantity of devices in the communication system 30 may also be determined according to a specific requirement. This is not limited. Devices in a system shown in FIG. 3 are described below.

A terminal may be a terminal device (terminal equipment) or user equipment (user equipment, UE) or a mobile station (mobile station, MS) or a mobile terminal (mobile terminal, MT), or the like, and includes a handheld device, an on-board device, a wearable device, or a computing device that has a wireless communication function. Specifically, the terminal may be a mobile phone (mobile phone), a tablet computer, or a computer with a wireless transceiver function, and may be further a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home, an on-board terminal, or the like. In embodiments of this application, an apparatus for implementing a function of the terminal may be a terminal, or may be an apparatus that can support the terminal in implementing the function, for example, a chip system (such as a chip, a processing system composed of a plurality of chips) or a modem. The following describes the system information sending method provided in embodiments of this application by using an example in which the apparatus for implementing the function of the terminal is the terminal.

The access network device is mainly configured to implement functions such as resource scheduling of the terminal, radio resource management, and radio access control, and is a device in a radio access network (radio access network, RAN) that connects the terminal to a radio network. The RAN may be connected to a core network (for example, the core network may be a core network of LTE, or may be a core network of 5G). The access network device may be an evolved NodeB (evolved NodeB, eNB or eNodeB) in LTE, a base station in a 5G network or a public land mobile network (public land mobile network, PLMN) in future evolution, a broadband network gateway (broadband network gateway, BNG), an aggregation switch, or a non-3GPP access device. Alternatively, the access network device in embodiments of this application may be further a radio controller in a cloud radio access network (cloud radio access network, CRAN), or a transmission and reception point (transmission and reception point, TRP), a device including the TRP, or the like. This is not specifically limited in embodiments of this application. Optionally, the access network device in embodiments of this application may include base stations in various forms, for example, a macro base station, a micro base station (also referred to as a small cell), a relay station, or an access point. This is not specifically limited in embodiments of this application. In embodiments of this application, an apparatus for implementing a function of the access network device may be the access network device, or may be an apparatus that can support the access network device in implementing the function, for example, a chip system (such as a chip, a processing system composed of a plurality of chips) or a modem (modem). The following describes the system information sending method provided in embodiments of this application by using an example in which the apparatus for implementing the function of the access network device is the base station.

Optionally, each device (for example, a terminal or an access network device) in FIG. 3 may also be referred to as a communication apparatus, and may be a general-purpose device or a specific-purpose device. This is not specifically limited in embodiments of this application.

Optionally, a related function of each device in FIG. 3 of this application may be implemented by one device, or may be jointly implemented by a plurality of devices, or may be implemented by one or more functional modules in a device. This is not specifically limited in embodiments of this application. It may be understood that the foregoing function may be a network element in a hardware device, or may be a software function running on dedicated hardware, or a combination of hardware and software, or a virtualization function instantiated on a platform (for example, a cloud platform).

The following describes the system information sending method provided in embodiments of this application with reference to the communication system shown in FIG. 3 below. Actions, terms, and the like involved in the following embodiments may be referred to each other. Names of messages exchanged between devices or names of parameters in the messages in each embodiment are only examples, and other names may also be used in actual implementation. For example, "corresponding" in the following embodiments may alternatively be described as "associated".

FIG. 4 is a schematic flowchart of a system information sending method according to an embodiment of this application. As shown in FIG. 4, the method may include the following steps.

S401: An access network device obtains a SIB2 when information in the SIB2 changes.

In this application, the information in the SIB2 may alternatively be described as radio resource configuration information, and is used to provide radio resource configuration for a terminal. The information in the SIB2 may include, but is not limited to: a threshServingLowQ parameter, a mac-ContentionResolutionTimer parameter, a ra-ResponseWindowSize parameter value, and the like. For the information in the SIB2 and specific meanings of the information included in the SIB2, refer to descriptions in the existing standard. Details are not described herein. A change of the information in the SIB2 may be understood as a change of the radio resource configuration information in the SIB2. The radio resource configuration information includes a radio resource configuration parameter and a specific value (value) of the radio resource configuration parameter. The change of the radio resource configuration information may be understood as a change of the radio resource configuration parameter and/or a change of a specific value of the radio resource configuration parameter.

Optionally, the change of the radio resource configuration parameter includes, but is not limited to, deletion or addition of a radio resource configuration parameter in the SIB2 within a current SI period compared with a radio resource configuration parameter in the SIB2 within a previous SI period. The change of the specific value of the radio resource configuration parameter may be understood as that a current specific value of the radio resource configuration parameter is different from a previous specific value, and so on. The current period may refer to an SI transmission period in the method shown in FIG. 4. The previous SI period may refer to an SI period that is adjacent to and earlier than the current SI period. The current specific value of the radio resource configuration parameter may refer to a specific value of the radio resource configuration parameter within the current SI period. A previous specific value of the radio resource configuration parameter may refer to a specific value of the radio resource configuration parameter within the previous SI period.

Optionally, the access network device may adaptively configure, based on a network communication condition between the access network device and the terminal and/or a preset communication requirement, the radio resource configuration parameter included in the SIB2 and the specific value of the radio resource configuration parameter. Radio resource configuration parameters included in the SIB2 within all SI periods and specific values of the radio resource configuration parameters that are configured by the access network device may be the same or different. In this case, the access network device may compare information included in the SIB2 within two adjacent SI periods, to determine, based on a comparison result, whether the information in the SIB2 changes. If the information changes, S401 is performed.

For example, it is assumed that within an SI period T1, the SIB2 includes a threshServingLowQ parameter, and a specific value of the threshServingLowQ parameter is 10 dB. Subsequently, within an SI period T2, the radio resource configuration parameter in the SIB2 remains unchanged and still includes the threshServingLowQ parameter, but the specific value of the threshServingLowQ parameter is not 10 dB. In this case, the specific value of the threshServingLowQ parameter in the SIB2 within the SI period T2 changes compared with that in the SIB2 within the SI period T1, and the SIB2 is considered changed.

In this application, the SIB2 with changed information may alternatively be described as a changed SIB2. This is not limited.

Further, the access network device may configure a transmission resource for the changed SIB2. For example, a 4^{th} system frame within a 1^{st} SI window is configured for the changed SIB2, so that the SIB2 is sent in the 4^{th} system frame within the 1^{st} SI window.

S402: The access network device sends the SIB2 located in the 4^{th} system frame within the 1^{st} SI window.

In this application, the 1^{st} SI window corresponds to a 1^{st} SI window within each SI period. The SI period may refer to the interval between two adjacent SI transmissions, and the SI period may include one or more SI windows. For example, assuming that the SI period is 160 ms, and a length of each SI window is 40 ms, the SI period may include four SI windows. A 1^{st} SI window within a 1^{st} SI period corresponds to 0 ms to 40 ms; a 1^{st} SI window within a second SI period corresponds to 160 ms to 200 ms; and so on.

Optionally, the 1^{st} SI window described in S402 may refer to a 1^{st} SI window or an initial SI window within the current SI period.

Optionally, the 4^{th} system frame within the 1^{st} SI window corresponds to a 4^{th} system frame transmitted in sequence within the 1^{st} SI window. The 4^{th} system frame may include a plurality of radio frames, for example, may include 10 radio frames. This application does not limit naming of the system frame and the 4^{th} system frame within the 1^{st} SI window. For example, the system frame may alternatively be described as a radio frame, or the system frame may be referred to as a frame for short. Alternatively, when system frames within the 1^{st} SI window are numbered starting from a system frame numbered 0, the 4^{th} system frame within the 1^{st} SI window may be referred to as a system frame numbered 3 within the 1^{st} SI window, or may be referred to as a radio frame numbered 3, or may be referred to as a frame numbered 3 for short. This is not limited.

Optionally, the access network device may send the SIB2 in a subframe included in the 4^{th} system frame within the 1^{st} SI window based on a status of the information included in the SIB2. The information included in the SIB2 is different, and subframes in the 4^{th} system frame within the 1^{st} SI window corresponding to the SIB2 are different. Specifically, a specific subframe, in the 4^{th} system frame, for sending the changed SIB2 may be specified in a protocol, or configured and indicated by a base station to the terminal. This is not limited.

In a possible design, when an MBSFN subframe is configured for the access network device, and the changed SIB2 includes MBSFN configuration information, a subframe in which the changed SIB2 is located and that is in the 4^{th} system frame within the 1^{st} SI window satisfies the following requirement: The subframe does not include the MBSFN subframe or a subframe occupied by a SIB1, in other words, the subframe is another subframe in the 4^{th} system frame other than the MBSFN subframe and the subframe occupied by the SIB1. The MBSFN subframe is a special subframe specified in a wireless communication protocol, and refers to a subframe used to send a broadcast message to a plurality of terminals, and includes at least one of the following: a subframe numbered 1, a subframe numbered 2, a subframe numbered 3, a subframe numbered 6, a subframe numbered 7, and a subframe numbered 8. The wireless communication protocol specifies that when the MBSFN subframe is configured for the base station, a subframe for the base station to send other SIs shall avoid the MBSFN subframe.

In addition, the changed SIB2 is located in the subframe in the 4^{th} system frame within the 1^{st} SI window, and there may be one or more subframes. When the changed SIB2 is located in a plurality of subframes in the 4^{th} system frame within the 1^{st} SI window, the plurality of subframes may be a plurality of consecutive subframes or a plurality of non-consecutive subframes.

When the changed SIB2 is located in one subframe in the 4^{th} system frame within the 1^{st} SI window, the subframe may be any one of a subframe numbered 0, a subframe numbered 4, a subframe numbered 5, and a subframe numbered 9 in the 4^{th} system frame within the 1^{st} SI window.

For example, it is assumed that in the SIB1, a length of each SI window is configured to 40 ms, and each SI window includes four system frames. In this case, the changed SIB2 is located in the subframe numbered 0 in the 4^{th} system frame within the 1^{st} SI window, or the changed SIB2 is located in the subframe numbered 4 in the 4^{th} system frame within the 1^{st} SI window, or the changed SIB2 is located in the subframe numbered 5 in the 4^{th} system frame within the 1^{st} SI window, or the changed SIB2 is located in the subframe numbered 9 in the 4^{th} system frame within the 1^{st} SI window.

When the changed SIB2 is located in a plurality of subframes in the 4^{th} system frame within the 1^{st} SI window, the plurality of subframes may be a plurality of subframes in the subframe numbered 0, the subframe numbered 4, the subframe numbered 5, and the subframe numbered 9 in the 4^{th} system frame within the 1^{st} SI window. For example, the changed SIB2 may be located in the subframe numbered 0 and the subframe numbered 4 in the 4^{th} system frame within the 1^{st} SI window, or the changed SIB2 may be located in the subframe numbered 4 and the subframe numbered 5 in the 4^{th} system frame within the 1^{st} SI window.

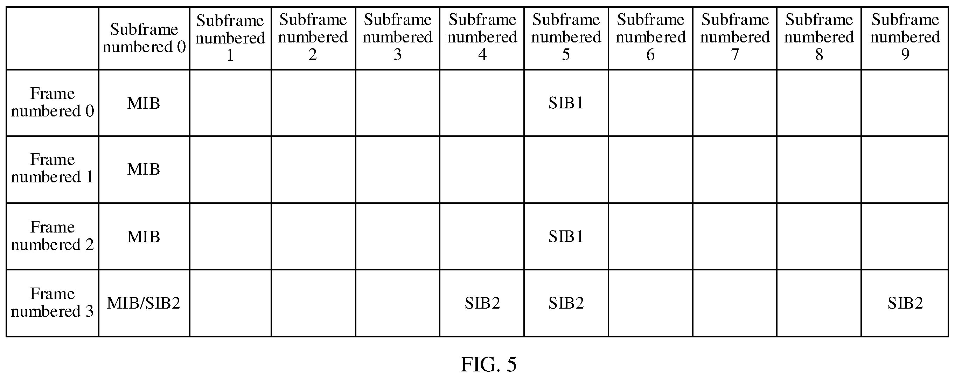

For example, as shown in FIG. 5, it is assumed that in the SIB1, the length of each SI window is configured to 40 ms, and each SI window includes four system frames. When the system frames within the 1^{st} SI window are named starting from a frame numbered 0, the changed SIB2 is located in a subframe numbered 0, a subframe numbered 4, a subframe numbered 5, and a subframe numbered 9 in a frame numbered 3 within the 1^{st} SI window.

The MBSFN configuration information may indicate the terminal to access a multimedia broadcast multicast service. In this case, the MBSFN subframe is configured for the access network device, and the MBSFN subframe is a special subframe specified in the wireless communication protocol, and refers to a subframe used to send a broadcast message to a plurality of terminals. The wireless communication protocol specifies that when the MBSFN subframe is configured for the base station, a subframe for the base station to send other SIs shall avoid the MBSFN subframe. The MBSFN subframe includes at least one of the following: a subframe numbered 1, a subframe numbered 2, a subframe numbered 3, a subframe numbered 6, a subframe numbered 7, and a subframe numbered 8. Corresponding to the MBSFN configuration information, non-MBSFN configuration information further exists. The non-MBSFN configuration information may indicate the terminal not to access the multimedia broadcast multicast service. In this case, the MBSFN subframe is not configured for the access network device.

In another possible design, when an MBSFN subframe is not configured for the access network device, and the changed SIB2 includes non-MBSFN configuration information, that is, the changed SIB2 does not include MBSFN configuration information, the changed SIB2 is located in a subframe in the 4^{th} system frame within the 1^{st} SI window, and there may be one or more subframes. A plurality of subframes may be a plurality of consecutive subframes or a plurality of non-consecutive subframes.

Specifically, the possible design may include the following descriptions.

When the changed SIB2 is located in any subframe in the 4^{th} system frame within the 1^{st} SI window, the subframe may be any subframe in the 4^{th} system frame within the 1^{st} SI window.

For example, it is assumed that in a SIB1, a length of each SI window is configured to 40 ms, and each SI window includes four system frames. When the system frames within the 1^{st} SI window are named starting from a frame numbered 0, the changed SIB2 may be located in a subframe numbered 0 in a frame numbered 3 within the 1^{st} SI window, or the changed SIB2 may be located in a subframe numbered 8 in the frame numbered 3 within the 1^{st} SI window, or the changed SIB2 may be located in a subframe numbered 3 in the frame numbered 3 within the 1^{st} SI window.

When the changed SIB2 is located in any plurality of subframes in the 4^{th} system frame within the 1^{st} SI window, the plurality of subframes may be at least one subframe in the 4^{th} system frame within the 1^{st} SI window.

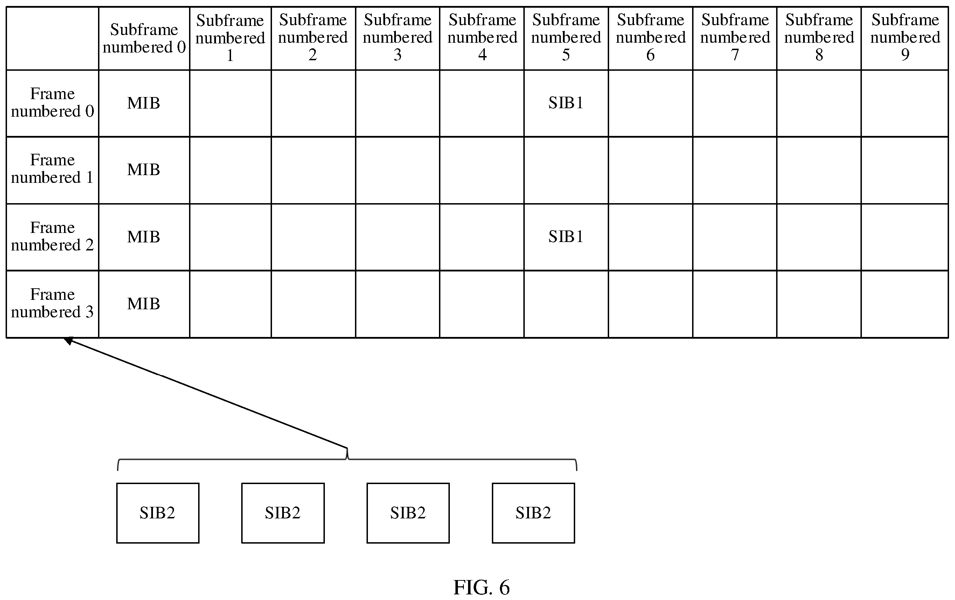

For example, it is assumed that in a SIB1, a length of each SI window is configured to 40 ms, and each SI window includes four system frames. When the system frames within the 1^{st} SI window are named starting from a frame numbered 0, as shown in FIG. 6, the changed SIB2 may be located in any four subframes in a frame numbered 3 within the 1^{st} SI window.

When the changed SIB2 is located in any plurality of subframes in the 4^{th} system frame within the 1^{st} SI window, the any plurality of subframes may be any plurality of consecutive subframes in the 4^{th} system frame within the 1^{st} SI window. For example, the changed SIB2 is located in first three consecutive subframes in the 4^{th} system frame within the 1^{st} SI window, or the changed SIB2 is located in last two consecutive subframes in the 4^{th} system frame within the 1^{st} SI window, or the changed SIB2 is located in middle four consecutive subframes in the 4^{th} system frame within the 1^{st} SI window.

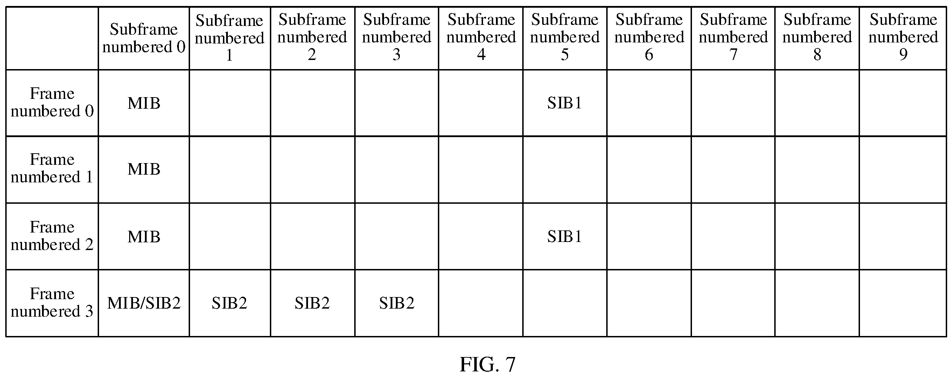

For example, it is assumed that in a SIB1, a length of each SI window is configured to 40 ms, and each SI window includes four system frames. When the system frames within the 1^{st} SI window are named starting from a frame numbered 0, as shown in FIG. 7, the changed SIB2 may be located in a subframe numbered 0, a subframe numbered 1, a subframe numbered 2, and a subframe numbered 3 in a frame numbered 3 within the 1^{st} SI window.

When the changed SIB2 is located in any plurality of subframes in the 4^{th} system frame within the 1^{st} SI window, the any plurality of subframes may be any plurality of non-consecutive subframes in the 4^{th} system frame within the 1^{st} SI window. For example, the changed SIB2 is located in a plurality of even-numbered subframes in the 4^{th} system frame within the 1^{st} SI window, or the changed SIB2 is located in a plurality of odd-numbered subframes in the 4^{th} system frame within the 1^{st} SI window.

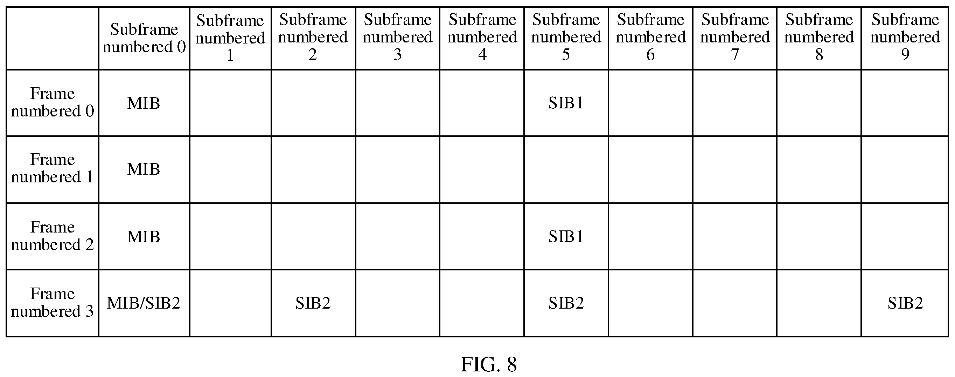

For example, it is assumed that in a SIB1, a length of each SI window is configured to 40 ms, and each SI window includes four system frames. When the system frames within the 1^{st} SI window are named starting from a frame numbered 0, as shown in FIG. 8, the changed SIB2 may be located in a subframe numbered 0, a subframe numbered 2, a subframe numbered 5, and a subframe numbered 9 in a frame numbered 3 within the 1^{st} SI window.

S403: The terminal receives the SIB2 in the 4^{th} system frame within the 1^{st} SI window, and parses the received SIB2.

Optionally, when the MBSFN subframe is configured for the access network device, and the changed SIB2 includes the MBSFN configuration information, the terminal may receive the changed SIB2 in any one or more of the subframe numbered 0, the subframe numbered 4, the subframe numbered 5, and the subframe numbered 9 in the 4^{th} system frame within the 1^{st} SI window.

When the MBSFN subframe is not configured for the access network device, and the changed SIB2 includes the non-MBSFN configuration information, the terminal may receive the changed SIB2 in at least one of the subframe numbered 0, the subframe numbered 1, the subframe numbered 2, and the subframe numbered 3 in the 4^{th} system frame within the 1^{st} SI window, or receive the changed SIB2 in at least one of the subframe numbered 0, the subframe numbered 2, the subframe numbered 5, and the subframe numbered 9 in the 4^{th} system frame, or receive the changed SIB2 in any one or more subframes in the 4^{th} system frame.

Further, the terminal may communicate with the access network device based on specific information, included in the SIB2, obtained through parsing.

According to the method shown in FIG. 4, when the information in the SIB2 changes, the access network device (for example, the base station) obtains the SIB2 with changed information, and then sends the SIB2 in the 4^{th} system frame within the 1^{st} SI window, so that the terminal can have enough time to establish a channel for receiving the SIB2 with changed information, and parse the SIB2 with changed information in a timely manner. This resolves long-term bit errors and sudden access service rate drops caused by the terminal failing to parse the SIB2 with changed information located within the 1^{st} SI window in a timely manner.

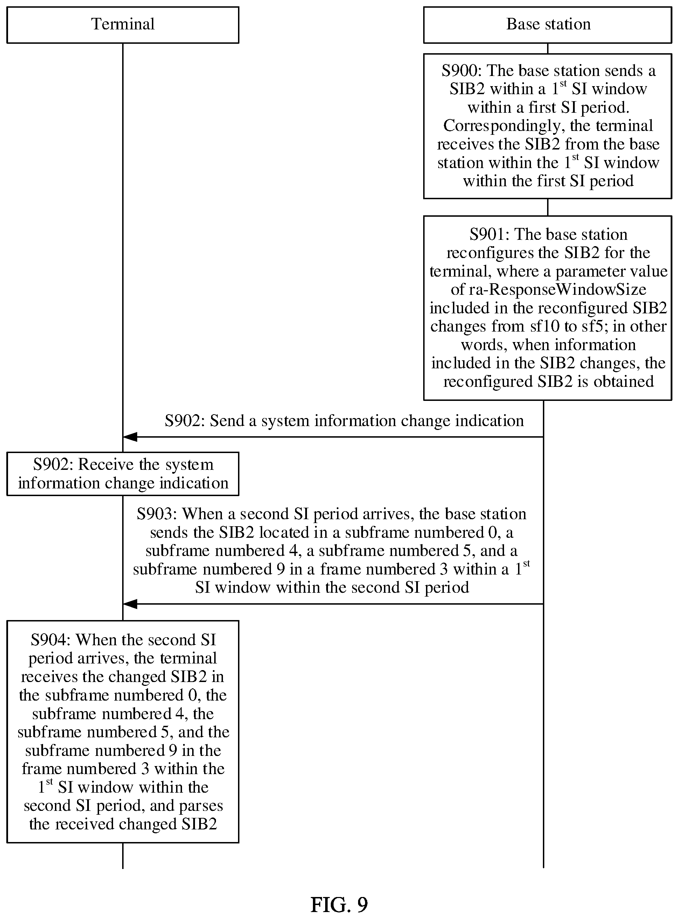

The following describes the system information sending method shown in FIG. 4 with reference to FIG. 9 by using an example in which the access network device is a base station, the MBSFN subframe is configured for the base station, the information in the SIB2 is the radio resource configuration information, and the radio resource configuration information includes the MBSFN configuration information.

FIG. 9 is a schematic flowchart of a system information sending method according to an embodiment of this application. As shown in FIG. 9, the method includes the following steps.

S900: A base station sends a SIB2 within a 1^{st} SI window within a first SI period. Correspondingly, a terminal receives the SIB2 from the base station within the 1^{st} SI window within the first SI period.

The SIB2 includes MBSFN configuration information, and may further include other existing information. This is not limited.

Optionally, the base station may send the SIB2 by using the conventional technology shown in FIG. 1 or FIG. 2a and FIG. 2b. In this application, if information in the SIB2 does not change, the SIB2 is sent according to the conventional technology.

S901: The base station reconfigures the SIB2 for the terminal, where a parameter value of ra-ResponseWindowSize included in the reconfigured SIB2 changes from sf10 to sf5, in other words, when the information included in the SIB2 changes, the reconfigured SIB2 is obtained.

The parameter value of ra-ResponseWindowSize indicates a length of a random response receiving window. A value range is sf2, sf3, sf4, sf5, sf6, sf7, sf8, sf9, and sf10, and a unit is a subframe. If the terminal receives no random access response within the window length indicated by the parameter value of ra-ResponseWindowSize, uplink synchronization fails.

Specifically, the parameter value of ra-ResponseWindowSize changes from sf10 to sf5, indicating that the length of the random response receiving window is reduced from 10 subframes to five subframes.

It needs to be noted that a change of the parameter value of ra-ResponseWindowSize in S901 is merely an illustrative example. Optionally, when other radio resource configuration parameters and/or parameter values change, S901 may also be performed.

S902: The base station sends a system information change indication to the terminal. Correspondingly, the terminal receives the system information change indication.

The system information change indication indicates, to the terminal, whether information in system information sent by the base station has changed when a next SI period arrives. If the system information change indication indicates that the information in the system information sent by the base station has changed, the terminal needs to re-parse the system information with changed information when the next SI period arrives. If the system information change indication indicates that the information in the system information sent by the base station has not changed, the terminal still parses, when the next SI period arrives, the system information based on the system information obtained before the change.

It should be understood that before the next SI period arrives, the terminal parses the system information based on the system information obtained before the change. The next SI period refers to a 1^{st} SI period that occurs after the terminal receives the system information change indication. In the embodiment corresponding to FIG. 9, the next SI period may be referred to as a second SI period.

Specifically, the change of the information in the system information can only occur in specific system frames, and the specific system frames are referred to as an SI period (modification period, MP for short). A number of a start system frame with the SI period needs to satisfy SFN mod m = 0, where m represents the SI period, and may be jointly determined by a modificationPeriodCoeff parameter and a defaultPagingCycle parameter in the SIB2 in the system information obtained before the change. For example, it is assumed that modificationPeriodCoeff = n2 and defaultPagingCycle = rf16 in the SIB2 in the system information obtained before the change, the SI period m = 2 × 16 = 32, and a unit is a quantity of system frames. Therefore, the number of the start system frame within the SI period may be a system frame numbered 0 or a system frame numbered 32, and one SI period includes 32 system frames.

Specifically, the system information change indication may correspond to a systemInfoValueTag field in a SIB1. The terminal may determine, based on the field, whether information in the system information sent by the base station other than an MIB/the SIB1/a SIB10/a SIB11/a SIB12 changes when the next SI period arrives. Each time the information in the system information (the system information other than the MIB/SIB1/SIB10/SIB11/SIB12) sent by the base station changes, a value of the field is incremented by 1. If the terminal determines, based on the value, that the information in the system information sent by the base station other than the MIB/SIB1/SIB10/SIB11/SIB12 changes when the next SI period arrives, the terminal needs to re-parse the system information with changed information when the next SI period arrives.

For example, it is assumed that the terminal determines, from the SIB2 in the system information obtained before the change, that the SI period includes 32 system frames, and the number of the start system frame within the SI period is the system frame numbered 0, the terminal parses the systemInfoValueTag field in the SIB1 in a system frame numbered 16, and determines that a value of the field is incremented by 1. In this case, the terminal re-parses the system information with changed information when the system frame numbered 32 arrives.

S903: When the second SI period arrives, the base station sends the SIB2 located in a subframe numbered 0, a subframe numbered 4, a subframe numbered 5, and a subframe numbered 9 in a frame numbered 3 within a 1^{st} SI window within the second SI period.

In this case, the SIB2 is the reconfigured SIB2 in S901. Subframe positions for the SIB2 in the frame numbered 3 within the 1^{st} SI window within the second SI period are shown in FIG. 5.

S904: When the second SI period arrives, the terminal receives the changed SIB2 in the subframe numbered 0, the subframe numbered 4, the subframe numbered 5, and the subframe numbered 9 in the frame numbered 3 within the 1^{st} SI window within the second SI period, and parses the received changed SIB2.

Specifically, when the second SI period arrives, after the terminal successfully parses the MIB and the SIB1 and after channel transformation duration, the terminal receives the changed SIB2 located in the subframe numbered 0, the subframe numbered 4, the subframe numbered 5, and the subframe numbered 9 in the frame numbered 3 within the 1^{st} SI window, and parses the changed SIB2. The channel transformation duration corresponds to duration required for the terminal to establish a channel for receiving the changed SIB2.

Further, the terminal may communicate with the access network device based on specific information, included in the SIB2, obtained through parsing.

According to the method shown in FIG. 9, when an MBSFN subframe is configured for the base station, and the information in the SIB2 includes the MBSFN configuration information, the changed SIB2 located in one or more subframes in a 4^{th} system frame within the 1^{st} SI window is sent by following provisions of a wireless communication protocol, where the one or more subframes in the 4^{th} system frame do not include the MBSFN subframe, so that this application is applicable to the standard wireless communication protocol. Correspondingly, the terminal receives the changed SIB2 located in the one or more subframes in the 4^{th} system frame within the 1^{st} SI window, so that after successfully parsing the SIB1, the terminal has enough time to establish the channel for receiving the changed SIB2, to further achieve an objective of parsing the changed SIB2 in a timely manner.

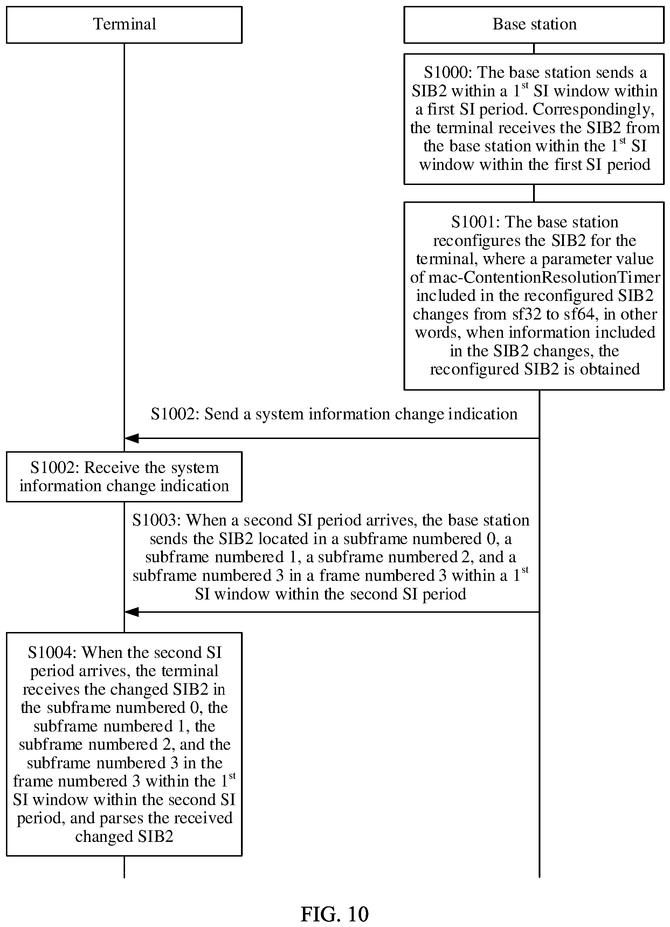

The following describes the system information sending method shown in FIG. 4 with reference to FIG. 10 by using an example in which the access network device is a base station, the MBSFN subframe is not configured for the base station, the information in SIB2 is radio resource configuration information, and the radio resource configuration information includes non-MBSFN configuration information.

FIG. 10 is a schematic flowchart of a system information sending method according to an embodiment of this application. As shown in FIG. 10, the method includes the following steps.

S1000: A base station sends a SIB2 within a 1^{st} SI window within a first SI period. Correspondingly, a terminal receives the SIB2 from the base station within the 1^{st} SI window within the first SI period.

The SIB2 includes non-MBSFN configuration information, and may further include other existing information. This is not limited.

S1001: The base station reconfigures the SIB2 for the terminal, where a parameter value of mac-ContentionResolutionTimer included in the reconfigured SIB2 changes from sf32 to sf64, in other words, when information included in the SIB2 changes, the reconfigured SIB2 is obtained.

The parameter value of mac-ContentionResolutionTimer indicates effective duration for the terminal to wait to receive Msg4 in a random access procedure. A value range of the parameter value of mac-ContentionResolutionTimer is sf8, sf16, sf24, sf32, sf40, sf48, sf56, and sf64, and a unit is a subframe. If the terminal receives no Msg4 within the duration indicated by the parameter value of mac-ContentionResolutionTimer, and a timer expires, random access fails, and the terminal re-performs the random access procedure. The Msg4 refers to a message sent by the base station for contention resolution in a contention-based random access procedure.

Specifically, the parameter value of mac-ContentionResolutionTimer changes from sf32 to sf64, indicating that the effective duration for the terminal to wait to receive the Msg4 is increased from a length of 32 subframes to a length of 64 subframes.

It needs to be noted that a change of the parameter value of mac-ContentionResolutionTimer in S1001 is merely an illustrative example. Optionally, when other radio resource configuration parameters and/or parameter values change, S901 may also be performed.

S1002: The base station sends a system information change indication to the terminal. Correspondingly, the terminal receives the system information change indication.

Specifically, an execution process of step S1002 is the same as that of step S902. For detailed descriptions, refer to S902. Details are not described herein again.

S1003: When a second SI period arrives, the base station sends the SIB2 located in a subframe numbered 0, a subframe numbered 1, a subframe numbered 2, and a subframe numbered 3 in a frame numbered 3 in a 4^{th} system frame within a 1^{st} SI window within the second SI period.

In this case, the SIB2 is the reconfigured SIB2 in S1001. Subframe positions for the SIB2 in the frame numbered 3 within the 1^{st} SI window within the second SI period are shown in FIG. 7.

S1004: When the second SI period arrives, the terminal receives the changed SIB2 in the subframe numbered 0, the subframe numbered 1, the subframe numbered 2, and the subframe numbered 3 in the frame numbered 3 within the 1^{st} SI window within the second SI period, and parses the received changed SIB2.

Specifically, when the second SI period arrives, after the terminal successfully parses the MIB and the SIB1 and after channel transformation duration, the terminal receives the changed SIB2 located in the subframe numbered 0, the subframe numbered 1, the subframe numbered 2, and the subframe numbered 3 in the frame numbered 3 within the 1^{st} SI window, and parses the changed SIB2. The channel transformation duration corresponds to duration required for the terminal to establish a channel for receiving the changed SIB2.

Further, the terminal may communicate with the access network device based on specific information, included in the SIB2, obtained through parsing.

According to the method shown in FIG. 10, when an MBSFN subframe is not configured for the base station, and the information in the SIB2 includes non-MBSFN configuration information, the changed SIB2 located in any one or more subframes in the 4^{th} system frame within the 1^{st} SI window is sent, so that this application is applicable to a standard wireless communication protocol. Correspondingly, the terminal receives the changed SIB2 located in any one or more subframes in the 4^{th} system frame within the 1^{st} SI window, so that after successfully parsing the SIB1, the terminal has enough time to establish the channel for receiving the changed SIB2, to further parse the changed SIB2 in a timely manner. This resolves long-term bit errors and sudden access service rate drops caused by the terminal failing to parse the changed SIB2 located within the 1^{st} SI window in a timely manner.

The foregoing mainly describes the solutions provided in embodiments of this application from a perspective of interaction between devices. It may be understood that to implement the foregoing functions, each of the devices such as the access network device (for example, the base station) or the terminal includes a corresponding hardware structure and/or software module for performing each of the functions. A person skilled in the art needs to be easily aware that algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the access network device, the terminal, and the like may be grouped into functional modules based on the foregoing method examples. For example, each of the functional modules may be obtained through grouping for each corresponding function, or two or more functions may be integrated into one processing module. The foregoing integrated module may be implemented in the form of hardware, or may be implemented in a form of a software functional module. It needs to be noted that groping of the modules in embodiments of this application is an example, and is merely logical function grouping. During actual implementation, there may be another grouping manner.

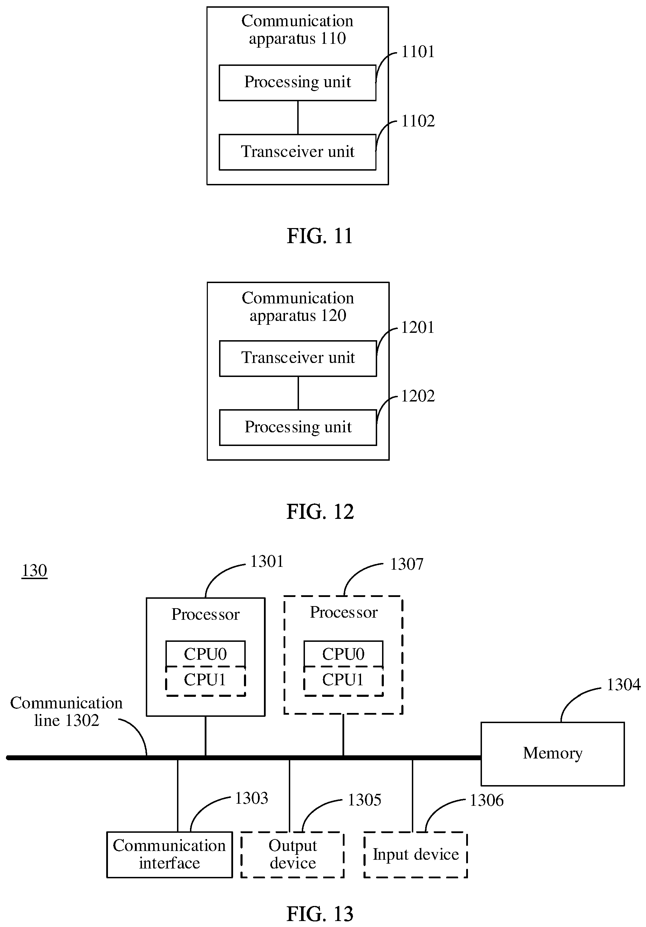

FIG. 11 shows a diagram of a structure of a communication apparatus 110. The communication apparatus 110 may be configured to perform the functions of a receiving end involved in the foregoing embodiments. In an implementation, the communication apparatus 110 shown in FIG. 11 includes a processing unit 1101 and a processing unit 1102.

The processing unit 1101 is configured to obtain a system information block SIB2 when information in the SIB2 changes. For example, the processing unit 1102 may support the communication apparatus 110 in performing S901 or S1001.

The transceiver unit 1102 is configured to send the SIB2. The SIB2 is located in a 4^{th} system frame within a 1^{st} system information SI window. For example, the transceiver unit 1101 may be configured to support the communication apparatus 110 in performing S903 or S1003.

For related descriptions of the SIB2 with changed information, the 1^{st} system information SI window, and the 4^{th} system frame, refer to the descriptions in the foregoing method embodiments.

Specifically, for related content of the steps involved in the method embodiments shown in FIG. 9 or FIG. 10, refer to functional descriptions of corresponding functional modules. Details are not described herein again. The communication apparatus 110 is configured to perform the functions of the base station in the system information sending method shown in FIG. 9 or FIG. 10. Therefore, the same effect as the foregoing system information sending method can be achieved.

In still another implementation, the communication apparatus 110 shown in FIG. 11 includes a processing module and a communication module. The processing module is configured to control and manage an action of the communication apparatus 110. For example, the processing module may integrate functions of the processing unit 1101, may be configured to support the communication apparatus 110 in performing S901, or may be configured to support the communication apparatus 110 in performing S1001 and other processes of the technology described herein. The communication module may integrate functions of the transceiver unit 1102, may be configured to support the communication apparatus 110 in performing S903, or may be configured to support the communication apparatus 110 in performing S1003 and communication with another network entity, for example, communication with the functional modules or network entities shown in FIG. 9 and FIG. 10. The communication apparatus 110 may further include a storage module, configured to store program code and data of the communication apparatus 110.

FIG. 12 shows a diagram of a structure of a communication apparatus 120. The communication apparatus 120 may be configured to perform the functions of the terminal involved in the foregoing embodiments. In an implementation, the communication apparatus 120 shown in FIG. 12 includes a transceiver unit 1201 and a processing unit 1202.

The transceiver unit 1201 is configured to receive a SIB2 with changed information. The SIB2 is located in a 4^{th} system frame within a 1^{st} system information SI window. For example, the transceiver unit 1201 may be configured to support the communication apparatus 120 in performing S904 or S1004.

The processing unit 1202 is configured to parse the SIB2 based on the SIB2. For example, the processing unit 1202 may support the communication apparatus 120 in performing S904 or S1004.

For related descriptions of the SIB2 with changed information, the 1^{st} system information SI window, and the 4^{th} system frame, refer to the descriptions in the foregoing method embodiments.

Specifically, for related content of the steps involved in the method embodiments shown in FIG. 9 or FIG. 10, refer to functional descriptions of corresponding functional modules. Details are not described herein again. The communication apparatus 120 is configured to perform the functions of the terminal in the system information sending method shown in FIG. 9 or FIG. 10. Therefore, the same effect as the foregoing system information sending method can be achieved.

In still another implementation, the communication apparatus 120 shown in FIG. 12 includes a processing module and a communication module. The processing module is configured to control and manage an action of the communication apparatus 120. For example, the processing module may integrate functions of the processing unit 1202, may be configured to support the communication apparatus 120 in performing S904, or may be configured to support the communication apparatus 120 in performing S1004 and other processes of the technology described herein. The communication module may integrate functions of the transceiver unit 1201, may be configured to support the communication apparatus 120 in performing S904, or may be configured to support the communication apparatus 120 in performing S1004 and communication with another network entity, for example, communication with the functional modules or network entities shown in FIG. 9 and FIG. 10. The communication apparatus 120 may further include a storage module, configured to store program code and data of the communication apparatus 120.

The processing module mentioned above may be a processor or a controller. The processing module may implement or execute various exemplary logical blocks, modules, and circuits described with reference to content disclosed in this application. The processor may also be a combination of processors implementing a computing function, for example, a combination including one or more microprocessors, or a combination of a DSP and a microprocessor. The communication module may be a transceiver circuit, a communication interface, or the like. The storage module may be a memory. When the processing module is a processor, the communication module is a communication interface, and the storage module is a memory, the communication apparatus 110 and the communication apparatus 120 involved in embodiments of this application may be a communication apparatus 130 shown in FIG. 13. For example, the access network device and the terminal mentioned above may be a composition structure shown in FIG. 13 or include a component shown in FIG. 13. FIG. 13 is a diagram of composition of a communication apparatus 130 according to an embodiment of this application. As shown in FIG. 13, the communication apparatus 130 may include a processor 1301, a communication line 1302, and a communication interface 1303.

Further, the communication apparatus 130 may further include a memory 1304. The processor 1301, the memory 1304, and the communication interface 1303 may be connected through the communication line 1302.

The processor 1301 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor 1301 may be further another communication apparatus having a processing function, such as a circuit, a device, or a software module.

The communication line 1302 is configured to transfer information between various components included in the communication apparatus 130.

The communication interface 1303 is configured to perform communication with another device or another communication network. The another communication network may be an Ethernet, a radio access network (radio access network, RAN), a wireless local area network (wireless local area network, WLAN), or the like. The communication interface 1303 may be a radio frequency module, a transceiver, or any communication apparatus capable of implementing communication. In embodiments of this application, an example in which the communication interface 1303 is a radio frequency module is used for description. The radio frequency module may include an antenna, a radio frequency circuit, and the like. The radio frequency circuit may include a radio frequency integrated chip, a power amplifier, and the like.

The memory 1304 is configured to store instructions. The instructions may be a computer program.

The memory 1304 may be a read-only memory (read-only memory, ROM) or another type of static storage device that may store static information and/or instructions, or may be a random access memory (random access memory, RAM) or another type of dynamic storage device that may store information and/or instructions, and may be further an electrically erasable programmable read-only memory (electrically erasable programmable read-only memory, EEPROM), a compact disc read-only memory (compact disc read-only memory, CD-ROM) or another compact disc storage, an optical disc storage, a disk storage medium or another magnetic storage device. The optical disc storage includes a compact disc, a laser disc, an optical disc, a digital versatile disc, a Blu-ray disc, and the like.

It needs to be noted that the memory 1304 may exist independently of the processor 1301, or may be integrated with the processor 1301. The memory 1304 may be configured to store instructions or program code or some data, or the like. The memory 1304 may be located in the communication apparatus 130, or may be located outside the communication apparatus 130. This is not limited. The processor 1301 is configured to execute the instructions stored in the memory 1304, to implement the communication method provided in the following embodiments of this application.

In an example, the processor 1301 may include one or more CPUs, for example, a CPU0 and a CPU1 in FIG. 13.

In an optional implementation, the communication apparatus 130 includes a plurality of processors, for example, in addition to the processor 1301 in FIG. 13, may further include a processor 1307.

In an optional implementation, the communication apparatus 130 further includes an output device 1305 and an input device 1306. The input device 1306 is a keyboard, a mouse, a microphone, a joystick, or the like, and the output device 1305 is a device such as a display screen or a speaker (speaker).

It needs to be noted that the communication apparatus 130 may be a desktop computer, a portable computer, a network server, a mobile phone, a tablet computer, a wireless terminal, an embedded device, a chip system, or a device having a similar structure in FIG. 13. In addition, the composition structure shown in FIG. 13 does not constitute a limitation on the communication apparatus. In addition to the component shown in FIG. 13, the communication apparatus may include more or fewer components than those shown in the figure, or some merged components, or different component arrangements.

In this embodiment of this application, the chip system may include a chip, or may include a chip and another discrete component.

An embodiment of this application further provides a computer-readable storage medium. All or some of the processes in the foregoing method embodiments may be implemented by a computer program instructing related hardware. The program may be stored in the foregoing computer-readable storage medium. When the program is executed, the processes in the foregoing method embodiments may be included. The computer-readable storage medium may be a terminal in any one of the foregoing embodiments, for example, an internal storage unit including a data transmission end and/or a data receiving end, such as a hard disk or a memory of the terminal. The foregoing computer-readable storage medium may also be an external storage device of the foregoing terminal, for example, a plug-in hard disk, a smart media card (smart media card, SMC), a secure digital (secure digital, SD) card, a flash card (flash card), or the like equipped on the terminal. Further, the foregoing computer-readable storage medium may further include an internal storage unit of the foregoing terminal and also include an external storage device. The foregoing computer-readable storage medium is configured to store the foregoing computer program and another program and data required by the foregoing terminal. The foregoing computer-readable storage medium may be further configured to temporarily store data that has been output or that is to be output.

It needs to be understood that in the technical solutions of this application, processing such as collection, storage, use, processing, transmission, provision, and disclosure of user personal information involved complies with relevant legal provisions, and does not violate public order and good customs. For example, in the technical solutions of this application, the processing of the user personal information is performed with user authorization. This is uniformly described herein. Details are not described herein again.

It needs to be noted that terms "first", "second", and the like in the specification, the claims, and the accompanying drawings of this application are used to distinguish between different objects, rather than being used to describe a specific order. In addition, terms "include", "have", and any variant thereof are intended to cover a non-exclusive inclusion. For example, a process, a method, a system, a product, or a device that includes a series of steps or units is not limited to the listed steps or units, and instead, optionally further includes a step or a unit that is not listed, or optionally further includes another step or unit that is intrinsic to the process, the method, the product, or the device.

It needs to be understood that in this application, "at least one (item)" means one or more, "a plurality of" means two or more, "at least two (items)" means two or three and more than three, and "and/or" is used to describe an association relationship between associated objects, and indicates that three relationships may exist. For example, "A and/or B" may indicate that only A exists, only B exists, and both A and B exist, where A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one (piece) of a, b, or c may indicate a, b, c, "a and b", "a and c", "b and c", or "a, b, and c", where a, b, and c may be singular, or may be plural.

It needs to be understood that in embodiments of this application, "B corresponding to A" indicates that B is associated with A. For example, B may be determined based on A. However, it needs to be further understood that determining B based on A does not mean that B is determined based on only A, and B may be further determined based on A and/or other information. In addition, the term "connection" in embodiments of this application means various connection manners such as direct connection or indirect connection to achieve communication between devices. This is not limited in embodiments of this application.

Unless otherwise specified, "transmission" (transmit/transmission) appearing in embodiments of this application refers to bidirectional transmission, and includes an action of sending and/or receiving. Specifically, the "transmission" in embodiments of this application includes data sending, data receiving, or data sending and data receiving. Alternatively, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. Terms "network" and "system" appearing in embodiments of this application express a same concept, that is, a communication system is a communication network.

Through the descriptions of the foregoing implementations, a person skilled in the art may clearly understand that for the purpose of convenient and brief description, only grouping of the foregoing functional modules is used as an example for description. During actual application, the foregoing functions may be allocated to and completed by different functional modules as required. In other words, an internal structure of an apparatus is grouped into different functional modules to complete all or some of the functions described above.

In several embodiments provided in this application, it needs to be understood that the disclosed communication apparatus and method may be implemented in other manners. For example, the communication apparatus embodiment described above is merely an example. For example, the grouping of modules or units is merely logical function grouping and may be another grouping manner during actual implementation. For example, a plurality of units or components may be combined or integrated into another apparatus, or some features may be ignored or not executed. In addition, the displayed or discussed mutual couplings or direct couplings or communication connections may be implemented through some interfaces. The indirect coupling or communication connection between the apparatuses or units may be implemented in electronic, mechanical, or other forms.

The units described as separate parts may or may not be physically separate, and a component displayed as a unit may be one physical unit or a plurality of physical units, may be located in one place, or may be distributed in different places. Some or all of the units may be selected based on an actual need to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in a form of a software product. The software product is stored in a storage medium, and includes several instructions for enabling a device, which may be for example a single-chip microcomputer or a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A system information sending method, comprising:
obtaining a system information block SIB2 when information in the SIB2 changes; and
sending the SIB2, wherein the SIB2 is located in a 4^{th} system frame within a 1^{st} system information SI window.

2. A system information sending method, comprising:
receiving a SIB2 with changed information, wherein the SIB2 is located in a 4^{th} system frame within a 1^{st} system information SI window; and
parsing the SIB2 based on the SIB2.

3. The method according to claim 1 or 2, wherein the information in the SIB2 comprises MBSFN configuration information, and the SIB2 is located in at least one of a subframe numbered 0, a subframe numbered 4, a subframe numbered 5, and a subframe numbered 9 in the 4^{th} system frame.

4. The method according to claim 1 or 2, wherein the information in the SIB2 comprises non-MBSFN configuration information, and the SIB2 is located in at least one of a subframe numbered 0, a subframe numbered 1, a subframe numbered 2, and a subframe numbered 3 in the 4^{th} system frame.

5. The method according to claim 1 or 2, wherein the information in the SIB2 comprises non-MBSFN configuration information, and the SIB2 is located in at least one of a subframe numbered 0, a subframe numbered 2, a subframe numbered 5, and a subframe numbered 9 in the 4^{th} system frame.

6. The method according to claim 1 or 2, wherein the information in the SIB2 comprises non-MBSFN configuration information, and the SIB2 is located in any one or more subframes in the 4^{th} system frame.

7. A communication apparatus, wherein the communication apparatus is used in an access network device, and the communication apparatus comprises:
a processing unit, configured to obtain a system information block SIB2 when information in the SIB2 changes; and
a transceiver unit, configured to send the SIB2, wherein the SIB2 is located in a 4^{th} system frame within a 1^{st} system information SI window.

8. A communication apparatus, wherein the communication apparatus comprises a processor and a communication interface, and the processor and the communication interface are configured to support the communication apparatus in performing the system information sending method according to claim 1 or any one of claims 3 to 6.

9. A communication apparatus, wherein the communication apparatus is used in a terminal, and the communication apparatus comprises:
a transceiver unit, configured to receive a SIB2, wherein the SIB2 is located in a 4^{th} system frame within a 1^{st} system information SI window; and
a processing unit, configured to parse the SIB2 based on the SIB2.

10. A communication apparatus, wherein the communication apparatus comprises a processor and a communication interface, and the processor and the communication interface are configured to support the communication apparatus in performing the system information sending method according to claim 2 or any one of claims 3 to 6.

11. A communication system, wherein the communication system comprises the communication apparatus according to claim 7 or 8, or the communication system comprises the communication apparatus according to claim 9 or 10.

12. A computer-readable storage medium, wherein the computer-readable storage medium stores computer instructions, and when the computer instructions are executed on a computer, the computer is caused to perform the method according to claim 1 or any one of claims 3 to 6, or the computer is caused to perform the method according to claim 2 or any one of claims 3 to 6.

13. A computer program product, wherein the computer program product comprises computer instructions, and when the computer instructions are executed on a computer, the computer is caused to perform the method according to claim 1 or any one of claims 3 to 6, or the computer is caused to perform the method according to claim 2 or any one of claims 3 to 6.
